# EUROPEAN PATENT APPLICATION

(11) **EP 3 409 460 A1**
(43) Date of publication of application: **05.12.2018**
(21) Application number: 17744023.7
(22) Date of filing: 17.01.2017
(51) Int. Cl.: B32B 3/30, B29C 59/02, B32B 15/08, B32B 27/00, B65D 65/40, B29L 7/00, B29L 9/00

(54) **DECORATIVE LAMINATED FILM AND MANUFACTURING METHOD THEREFOR**

(30) Priority: 27.01.2016 JP 2016013159
(71) Applicant: Toyo Seikan Co., Ltd., Tokyo 141-8640 (JP)
(72) Inventor: YASUUMI, Takahiro, Yokohama-shi Kanagawa 230-0001 (JP); HATANO, Yasushi, Tokyo 141-8640 (JP)
(74) Representative: J A Kemp
(86) International application number: PCT/JP2017/001383
(87) International publication number: WO 2017/130792

(57) **Abstract**

The present invention relates to a decorative laminate film including at least an inner film and an outer film, on which a printed pattern and a protruded portion that protrudes toward the outer film side are formed, wherein the protruded portion is positioned on or in the vicinity of the printed pattern, and the outline of the printed pattern is blurred. The printed pattern and the protruded portion can be aligned easily, thereby providing excellent productivity. Even if the protruded portion is slightly misaligned, the design does not deteriorate, and the decorative laminate film has a favorable design due to gradation effect imparted by the protruded portion and the adjacent printed pattern.

## Description

### Technical Field:

The present invention relates to a decorative laminate film having excellent design, which has a pattern imparted with an emphasized stereoscopic effect by a combination of a printed pattern and a protruded portion. More specifically, the present invention relates to a decorative laminate film, and a method for producing the same with excellent productivity, where alignment of the printed pattern and the protruded portion may be conducted easily.

### Background Art:

For bag-like containers such as a pouch to be filled with semi-fluid or fluid contents such as food, beverage and a detergent, and sealing members to be used as lids for a cup-like or tray-like containers, it is required to provide them with patterns such as a character (here, "character" may indicate also "letter" or "numeral") indicating a product name or the like, a sign and various figures to differentiate the product and enhance the product value. In order to satisfy the requirements, the patterns of characters, signs and figures are emphasized by three-dimensional printing, for instance.

For instance, Patent document 1 below proposes a bag-like container having an embossed pattern formed by heating a protruded portion formed in accordance with the emboss pattern to a predetermined temperature, thereby bringing the protruded portion into contact with a surface of a soft packaging material to partly shrink the soft packaging material, so that the soft packaging material may swell outward to form an embossed pattern. In this embossed bag-like container, an embossed pattern with a texture different from that provided by printing is formed on the bag-like container, which is, however, insufficient to provide a synergy effect by the combination of the embossed pattern and the printing. As a result, a satisfactory effect cannot be obtained from the viewpoint of design.

Patent document 2 below proposes a laminate film formed by laminating a plurality of films different from each other in the thermal expansion coefficients. The laminate film is pressed with a heated mold of a character or a mark so that the laminate film is swelled to have the shape of the mold. Alternatively, a laminate film is produced by transferring a foil having a shape of the mold to a laminate film and allowing to swell to have the shape of the mold. In this laminate film, it is possible to swell the character and/or mark itself and form a three-dimensional character and/or mark.

However, the aforementioned methods of decoration by partly swelling the laminate film to impart stereoscopic effect to the character and the mark remain unsatisfactory. If the area and the level of the swelling is increased to enhance the decorative effect, the thickness of the inner film may be decreased partly to make it difficult to maintain the material strength and the barrier property. This may inhibit the packaging material from keeping its properties for protection or preservation of the contents.

In order to solve the problems, the present inventors propose a decorative laminate film where a character and/or a figure is formed on a print and on an outwardly protruded portion. At least a part of the pattern has a metallic luster and is different in the hue or the like from the region other than the pattern (Patent application No. 2015-155936).

### Prior Art Documents:

### Patent Documents:

Patent Document 1: JP 4370768
Patent Document 2: JP 5150433

### Summary of the Invention:

### Problems to be solved by the invention:

Even if the protruded portion is made small not to inhibit the function for a packaging material, the aforementioned decorative laminate film can have a remarkably enhanced design through techniques in layout of printing design and combination of hues or the like.

However, production of the laminate film is rather difficult, since an advanced alignment precision is required for formation of the protruded portion along the outline of the printed pattern or a knockout printed pattern (hereinafter, both are called printed pattern). In particular, in a case of continuous formation at a high speed, misalignment may occur.

Therefore, an object of the present invention is to provide a decorative laminate film having a favorable design and a method for producing the same. Since the printed pattern and the protruded portion can be aligned easily, excellent productivity is obtained. Further, the design is not degraded even if there is a slight misalignment in the position of the protruded portion, and the gradation effect of the printed pattern at the protruded portion and the vicinity thereof may provide the favorable design.

### Means for solving the problems:

The present invention provides a decorative laminate film, which comprises at least an inner film and an outer film, on which a printed pattern and a protruded portion protruding toward the outer film side is formed. The protruded portion is positioned on the printed pattern or in the vicinity thereof, and the outline of the printed pattern is blurred.

In the decorative laminate film of the present invention, it is preferable that:
1. the contour of the protruded portion is positioned in the vicinity of the blurred outline of the printed pattern;
2. the protruded portion has a shape different from that of the printed pattern;
3. the printed pattern has a metallic luster, and the metallic luster is derived from any of a metal vapor deposition layer, a metal foil, or a high-brightness ink printed layer constituting the pattern, any of the layers and the foil being provided on the inner surface the outer film; and
4. the blurring is caused by a change in dot size of halftone printing.

Further, the present invention provides a method for producing a decorative laminate film. In the method, on a laminate film comprising at least an inner film and an outer film, a printed pattern with blurred outline is formed, and then, the printed laminate film is compress-shaped in a cold, warm or hot process, so that a protruded portion is formed at the position of the printed pattern to protrude toward the outer film side.

In the method for producing the decorative film of the present invention, the laminate film has an inner film of polyethylene and an outer film of stretched nylon or stretched polyethylene terephthalate. Between the inner film and the outer film, preferably a metal vapor deposition layer, a metal foil or a high-brightness ink printed layer constituting the pattern is provided.

### Effects of the invention:

In the decorative laminate film of the present invention, the protruded portion may be emphasized particularly by a combination of the printed pattern and the protruded portion formed on this printed pattern. Furthermore, since the outline of the printed pattern is blurred, even if the printed pattern and the protruded portion are misaligned slightly from each other, the effect of improving the design imparted by the combination of the printed pattern and the protruded portion may not deteriorate. In addition, the printed pattern provided by the blurring exhibits its unique design. Further, by matching the shape of the protruded portion with the printed pattern or by forming the protruded portion of a shape different from the printed pattern, various decorative effects can be imparted.

The aforementioned effect of the present invention is evident also from the result of Examples below.

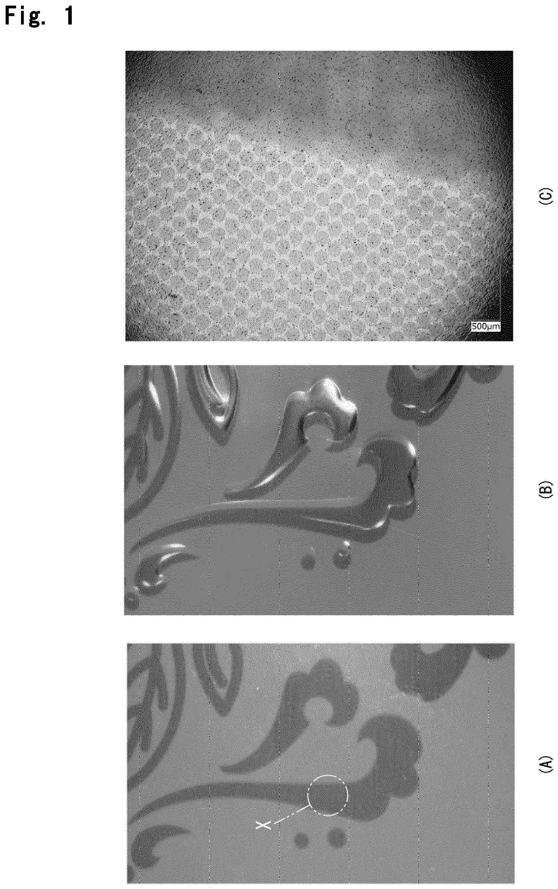

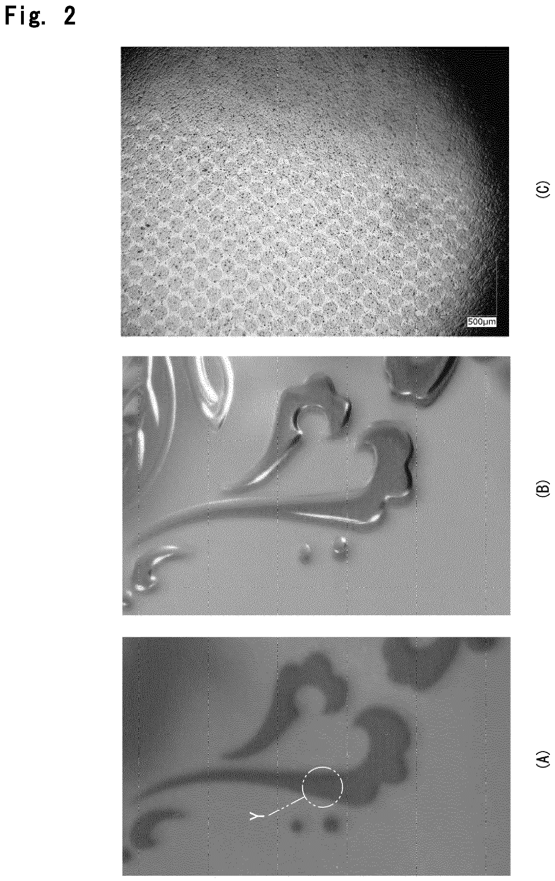

In a case of forming a protruded portion on a printed pattern having an outline not being blurred but having a definite boundary formed between the printed pattern and the remaining region, if the protruded portion is slightly misaligned from the printed pattern, the misalignment between the outline of the printed pattern and the contour of the protruded portion can be visually confirmed soon, and it may degrade the design (Fig. 1(B)). Meanwhile, in a case of forming a printed pattern of the same shape and the same color as those in Fig. 1 while blurring the outline, similarly to the case of Fig. 1, even if the protruded portion is misaligned slightly from the printed pattern, it can give an impression that the contour of the protruded portion is intentionally shaded. It can provide an excellent design without making the protruded portion misalignment recognizable (Fig. 2(B)).

Further, due to the metallic luster of the printed pattern, the protruded portion may be emphasized particularly. Moreover, since the protruded portion is formed along at least a part of the printed pattern, the decorative effect is improved remarkably in comparison with a conventional decoration provided by the combination of a printed pattern and a protruded portion.

In the method for producing the decorative laminate film of the present invention, since the outline of the printed pattern is blurred, there is no necessity of precisely aligning the protruded portion, and thus, the method can be applied to continuous production at high speed.

### Brief Description of the Drawings:

[Fig. 1] shows a decorative laminate film. Namely, Fig. 1(A) is a photograph showing a printed pattern region of a laminate film after printing; Fig. 1(B) is a photograph showing a printed pattern region shown in Fig. 1(A), on which a protruded portion having a contour similar to the outline of the pattern is formed; and Fig. 1(C) is a photograph showing an enlarged view of the site X of the outline region of the printed pattern in Fig. 1 (A).
[Fig. 2] shows an example of decorative laminate film of the present invention, having the printed pattern of Fig. 1 with a blurred outline. Fig. 2 (A) is a photograph showing a printed pattern region of the laminate film after printing; Fig. 2(B) is a photograph showing the pattern region in Fig. 2(A), on which a protruded portion having a similar contour is formed; and Fig. 2 (C) is a photograph showing a view of the site Y of the outline region of the printed pattern in Fig. 2(A).
[Fig. 3] shows another example of decorative laminate film of the present invention. Fig. 3(A) is a photograph showing a printed pattern region of the laminate film after knockout printing; Fig. 3(B) is a photograph showing the pattern region in Fig. 3(A), on which a protruded portion having a similar contour is formed; and Fig. 3 (C) is a photograph showing a view of the site Z of the outline of the printed pattern in Fig. 3 (A).
[Fig. 4] shows a further example of decorative laminate film of the present invention. Fig. 4(A) is a photograph showing a printed pattern region of the laminate film after printing; and Fig. 4(B) is a photograph showing the pattern region in Fig. 4(A), on which a protruded portion having a contour different from the printed pattern is formed on the printed pattern.
[Fig. 5] is a cross-sectional view of a protruded portion formed on the decorative laminate film of the present invention.
[Fig. 6] is a flow chart showing a process for forming a protruded portion of the decorative laminate film of the present invention.
[Fig. 7] is a schematic view showing a positional relationship between a printed pattern and a protruded portion in Example 1.
[Fig. 8] is a schematic view showing a positional relationship between a printed pattern and a protruded portion in Example 2.

### Mode for Carrying Out the Invention:

### (Printed pattern and protruded portion)

An essential feature of the decorative laminate film of the present invention is that the outline of the printed pattern formed on the laminate film does not form a definite boundary with the remaining region, but it is blurred to be ambiguous, namely, it is formed to be fuzzy.

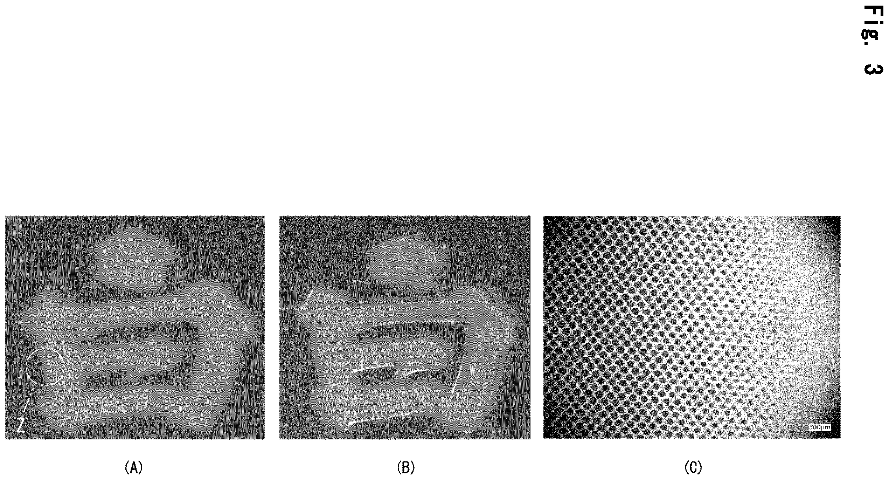

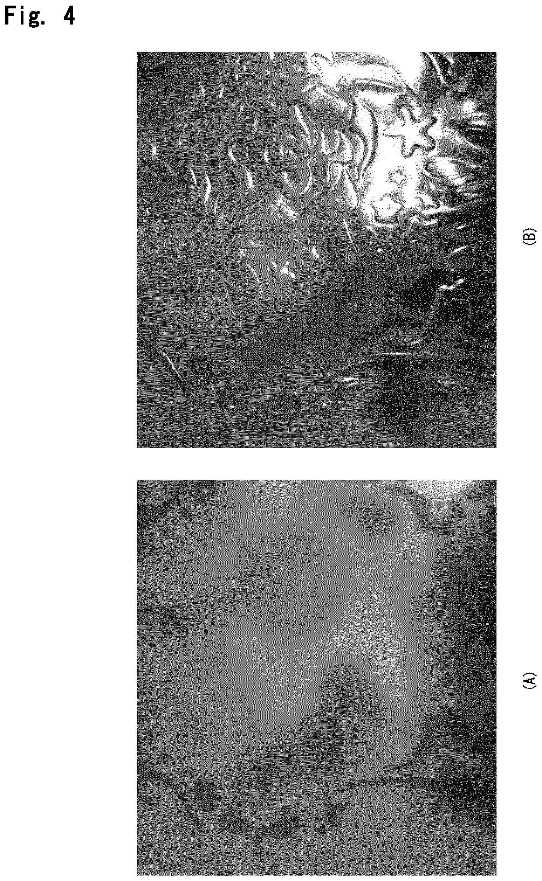

As mentioned above, the printed pattern formed on the decorative laminate film of the present invention is a printed pattern (Fig. 2(A) or Fig. 4(A)), or a knockout printed pattern (Fig. 3(A)).

As mentioned above, a specific printed pattern does not form any definite boundary with the surrounding region other than the printed pattern. Therefore, even when the protruded portion is formed misaligned from the position of the printed pattern, the misalignment may not be recognized easily unlike the case of a printed pattern having a definite boundary, and thus, the design may not be degraded. Moreover, it may be possible to impart a decorative effect of intentionally shading the protruded portion.

In the present invention, the blurring at the outline of the printed pattern can be formed in the following manner. For instance, the size of halftone dots constituting the pattern is decreased gradually toward the outline of the printed pattern, or the dot density is changed, thereby forming a gradation with a change in the concentration of the same color. Alternatively, after the printing, the vicinity of the outline is pressed for allowing the ink to run before curing, for instance. The formation method may not be limited as long as the outline is blurred not to form any definite boundary.

Preferably, the printed pattern is formed by changing the size of the dots of the halftone printing because the method provides excellent productivity and can form uniform blurring along the outline.

Further, the print layer is preferably provided on the outer film. The print may be provided on either the outer surface or the inner surface (back face). However, from the viewpoint of obtaining excellent metallic luster as described below and preventing delamination and scratch on the print layer, the print is preferably provided on the inner surface (back face).

The method for blurring the outline of the printed pattern will be described with reference to specific examples.

In the decorative laminate film of the present invention, the outline of the printed pattern and the contour of the protruded portion may be identical to or different from each other.

Fig. 1 consists of photographs of a printed pattern region on a decorative laminate film where the aforementioned printed pattern has an outline that is not blurred. As shown in Fig. 1(B), the outline of the printed pattern and the contour of the protruded portion are identical, and as shown in Fig. 1(C), the green (printed arabesque pattern) halftone dots of the site X in Fig. 1(A) make a solid-coated state to form a boundary.

In contrast, Fig. 2 consists of photographs of a printed pattern region of a decorative laminate film in Example 1 as mentioned below. As shown in Fig. 2(B), the printed pattern and the protruded portion have the same shape, and as shown in Fig. 2(C), the outline of the printed pattern of the green (printed arabesque pattern) halftone dots of the site Y in Fig. 2 (A) is blurred, so that the rather pale green color of the dots at the outline of the printed pattern gradually gets deep to form a gradation.

As shown in Fig. 2(A), the entire outline of the green printed pattern (printed arabesque pattern) is blurred. The printed pattern alone may give an obscure impression. However, since a protruded portion is formed on the entire green printed pattern (printed arabesque pattern) as shown in Fig. 2(B), the green pattern (printed arabesque pattern) appears to be three-dimensional, and it imparts a remarkable design. Moreover, the metal vapor deposition layer provides a silver color, which adds a luster to enhance the design.

Fig. 3 consists of photographs showing a pattern region of a decorative laminate film in Example 2 as mentioned below. As shown in Fig. 3(B), a knockout printed pattern and the protruded portion have the same shape. The Chinese character meaning "white" of the knockout printed pattern has a silver color derived from the metal vapor deposition layer formed on the laminate film, and the black region constituting the background is formed of halftone dots. And as evidently shown in Fig. 3(C), the site Z in Fig. 3(A) is knockout printed such that the size of the black dots is decreased gradually (the dot percent is 0%), thereby forming a gradation from black to silver color of the metal vapor deposition layer.

As shown in Fig. 3(A), the entire outline of the printed pattern of the character "white" is blurred so that the printed pattern alone gives an obscure impression. However, since the protruded portion to protrude at only the outline of the pattern is formed along the outline of the character "white" as shown in Fig. 3(B), the character "white" appears to be three-dimensional to enhance the design. The character "white" itself is formed by a knockout printing, but due to the silver color derived from the metal vapor deposition layer, it exhibits an effect similar to that obtained by an embodiment of a high-brightness printing.

In this case, the laminate film having a ground color of the metal vapor deposition layer may be provided with a gold-color luster with yellow printing. Alternatively, a laminate film having no metal vapor deposition layer and printed with other color(s) may be used.

In the present invention, the positional relationship between the printed pattern and the protruded portion may vary greatly depending on the precision or the like in alignment of the printed pattern and the protruded portion in a case where the outline of the printed pattern and the contour of the protruded portion are identical as in the decorative laminate films shown in Figs. 2 and 3. For increasing the acceptable range of misalignment from the printed pattern in formation of the protruded portion, the protruded portion is positioned to at least partly overlap with the blurred outline of the printed pattern, and furthermore, the width of the blurring of the outline of the printed pattern is preferably set to a range of 0.5 to 5 mm, and particularly preferably in a range of 1 to 4 mm.

Fig. 4 consists of photographs showing a pattern of a decorative laminate film where the outline of the printed pattern and the contour of the protruded portion are different from each other. Fig. 4(A) is a photograph of the pattern region of the laminate film after printing, and Fig. 4(B) is a photograph showing the pattern region of Fig. 4(A) on which a protruded portion having a similar contour (arabesque) and other protruded portions (flower and leaf shapes) having different contours are formed. As shown in Fig. 4(A), a simply-colored abstract pattern is provided on the central region, which cannot exhibit any specific shape and thus, it cannot provide a satisfactory design. However, as shown in Fig. 4(B), the patterns of flowers and leaves are formed on the abstract pattern, thereby making it possible to exhibit a design different from a case where the printed pattern and the protruded portion have the same shape.

In the aforementioned decorative laminate film, each gradation has a single color of green or black. Alternatively, the gradation may be formed by overlapping two or more colors.

The shape of the dots can be selected from typical ones such as square dots, honeycomb dots, chain dots, round dots and sandblast. Further, it is possible to employ a round-square-round, namely, to change its shape depending on the dot size. It is further desirable to take any known measures against moire.

The printed pattern of the present invention is not limited particularly as long as the outline is blurred. The hue, the brightness, the chroma or the luster and the like are different from those in the region other than the printed pattern, whereby the stereoscopic effect of the pattern is emphasized synergistically with the protruded portion formed on the printed pattern.

Further, the printed pattern preferably has a metallic luster at at least a part thereof. The metallic luster is derived from a metal vapor deposition layer, a metal foil, or a high-brightness ink printed layer constituting the pattern, so that the luster enables to emphasize the protruded portion in particular. The metallic luster can be imparted by printing with a high-brightness ink containing a pearl pigment or a metal pigment. Preferably, as mentioned below, the metallic luster is imparted since the laminate film has a metal vapor deposition layer of aluminum or the like or a metal foil of aluminum or the like, and thus, the ground color of the laminate film has a metallic luster.

The protruded portion may be formed to protrude as a whole (Fig. 2(B)) or to protrude only at the outline region of the pattern (Fig. 3(B)), depending on the pattern to be formed. That is, it may be a part of the pattern or a combination thereof.

The width and height of the protruded portion may vary depending on whether the entire pattern is formed to protrude or a part of the pattern is formed to protrude, and they cannot be determined unconditionally. In a case of using the decorative laminate film of the present invention as a bag-like container such as a pouch or a packaging member such as a sealing member, properties like a mechanical strength and a barrier property are required. In light of this, a main protruded portion has a width of not more than 5 mm, particularly in a range of 1 to 3 mm, and the height h of the protruded portion is 0.1 to 0.5 mm, particularly in a range of 0.15 to 0.35 mm. Due to this reason, in a case of constituting a large pattern, it is preferable that a part of the pattern such as its outline is rimmed with the protruded portion.

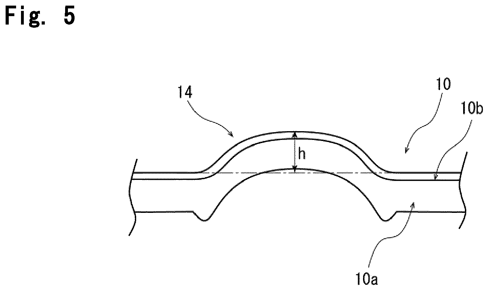

Fig. 5 is a cross-sectional view showing a region of protruded portion of a decorative laminated film of the present invention. As shown in Fig. 5, the shaping height h of a protruded portion 14 is measured with reference to the surface of the outer film 10b.

The surface roughness at the protruded portion is made higher than the surface roughness of the region surrounding the protruded portion, thereby creating a difference in the luster therebetween, so that light may be scattered to glitter at the protruded portion. This can further emphasize the stereoscopic effect of the pattern such as a character, a sign and a figure, thereby imparting decoration having a further favorable design.

Further, alignment of the printed pattern and the protruded portion can be conducted as follows. In addition to visual checking, a position of a particular printed pattern or any mark for alignment is detected by use of a photoelectric sensor, an image sensor, an image processing camera or the like. After alignment of the printed pattern and a protruded-portion formation mold, a protruded portion can be formed on the printed pattern by use of the protruded-portion formation mold.

### (Laminate film)

The laminate film used for the decorative laminate film of the present invention comprises at least an inner film and an outer film. From the viewpoint of the process for shaping the protruded portion described below, it is preferable to use a laminate film comprising an elastic film for the inner film and a less elastic film for the outer film.

For the elastic film used for the inner film is preferably a sealant film having a heat sealing property, made of polyethylene, polypropylene or the like. For the polyethylene, a linear low density polyethylene is particularly preferred. The sealant film may contain additives such as modified resins like an ethylene-α-olefin copolymer and an anti-blocking agent. For the less elastic film used as the outer film, a stretched film made of nylon, polyethylene terephthalate (hereinafter, it may be referred to as "PET") is used preferably.

Specifically, though not being limited to these examples, it is possible preferably to use in an order of inner surface /outer surface: linear low density polyethylene film / stretched nylon film; linear low density polyethylene film / stretched nylon film / stretched PET film; linear low density polyethylene film / stretched PET film / stretched nylon film; linear low density polyethylene film / aluminum vapor deposition stretched nylon film / stretched PET film; linear low density polyethylene film / aluminum vapor deposition stretched PET film / stretched nylon film; linear low density polyethylene film / aluminum foil / stretched nylon film; polypropylene film / stretched nylon film; polypropylene film / stretched nylon film / stretched PET film; polypropylene film / stretched PET film / stretched nylon film; polypropylene film / aluminum vapor deposition stretched nylon film / stretched PET film; polypropylene film / aluminum vapor deposition stretched PET film / stretched nylon film; linear low density polyethylene film / stretched nylon film / aluminum foil / stretched PET film; and the like.

As mentioned above, since the patterns such as a character, a sign, a figure or the like have a metallic luster in the decorative laminate film of the present invention, the stereoscopic effect of the protruded portion can be emphasized further. Among the examples, a layer constitution having an aluminum vapor deposition layer or an aluminum foil can be used preferably.

It is particularly preferable that the thicknesses of the inner film and the outer film before shaping the protruded portion are as follows from the viewpoint of process of shaping the protruded portion, namely, the inner film has a thickness in a range of 60 to 200 µm, the outer film has a thickness in a range of 10 to 30 µm, and the inner film has a thickness approximately 3 to approximately 20 times the thickness of the outer film, though the thicknesses are not limited to these ranges.

One or more other layer(s) may be formed further as long as the effect of the present invention is not impaired. For instance, the aforementioned metal vapor deposition film or a metal foil such as an aluminum foil may be formed between the inner film and the outer film, or a top coat layer may be formed on the outer surface of the outer film.

In a case of adding a further layer to the laminate film, the total thickness of the laminate film is preferably in a range of 70 to 300 µm.

### (Method for producing a decorative laminate film)

The decorative laminate film of the present invention is produced by printing a pattern with a blurred outline on the aforementioned laminate film comprising at least an inner film and an outer film, and later, by forming a protruded portion on the position of the printed pattern.

There is no particular limitation on the process for shaping the protruded portion as long as a protruded portion protruding toward the outer film side can be formed. As described above, however, it is preferable in the present invention to use a laminate film comprising an elastic film as an inner film and a less elastic film as an outer film, and to shape the laminate film by compressing in a cold, warm or hot process, whereby the protruded portion may protrude toward the outer film side.

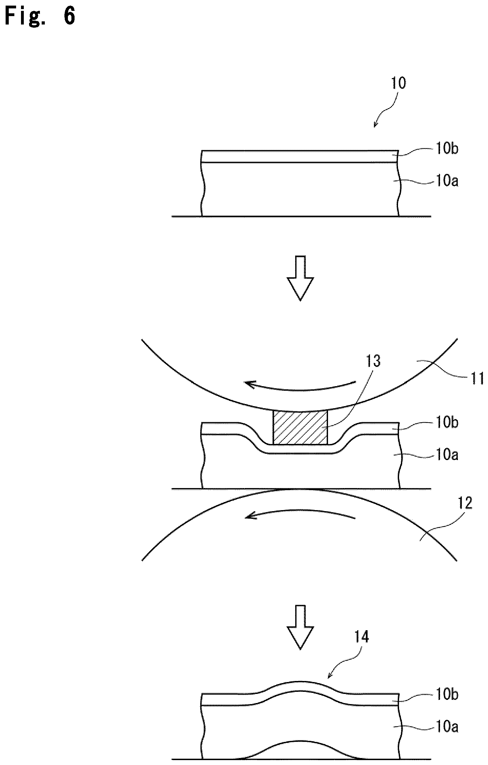

Fig. 6 is a set of views to explain an example of shaping the protruded portion of the decorative laminate film of the present invention. As shown in Fig. 6, a laminate film 10 having an inner film 10a and an outer film 10b is heated to room temperature or approximately the softening point of the inner film 10a. The heated laminate film 10 is subjected to shaping by placing the laminate film 10 between an anvil roll 12 and a processing roll 11 having a processing portion 13 to compress with the processing portion 13 at a site to form the protruded portion in the thickness direction. When the pressure applied thereto is released, the compressed site protrudes toward the outer film 10b side, thereby forming a protruded portion 14.

The protruded portion can be shaped in a cold process without heating the processing portion. Alternatively, it can be shaped in a hot process by heating the processing portion approximately to the softening temperature of the inner film or in a warm process by heating the processing portion to a temperature between those of the cold process and the hot process. For instance, when the inner film is made of linear low density polyethylene, a warm process may be conducted by heating the processing portion to a temperature range of 35 to 80°C or a hot process may be conducted by heating the processing portion to a temperature range of 80 to 100°C, and a cooling process may be conducted after the processing as required.

Here, the shaping height h of the protruded portion is determined depending on the compression applied by the processing portion. For instance, in a case of processing between a pair of rolls as shown in Fig. 6, the height is determined depending on the clearance between the processing portion 13 and the anvil roll 12.

In the specific example shown in Fig. 6, shaping by compression is conducted between a pair of rolls including the processing roll 11 having the processing portion 13. This example does not limit the technique but the anvil roll 12 may have a male mold at a site corresponding to the processing portion 13. Alternatively, the roll process of compression between a pair of rolls as shown in Fig. 6 may be replaced by press process. Similarly in this case, the surface to be processed (inner film 10a side) may be flat or may protrude.

The process for shaping the protruded portion of the decorative laminate film of the present invention can be applied to a long-length laminate film or a set of sheet-type decorative laminate films.

### Examples:

### (Example 1)

### 1. Laminate film and pattern thereof

A laminate film used here comprised an inner film (120 µm) of linear low density polyethylene and an outer film of a nylon film (15 µm) that had a print on its inner surface. Between the inner film and the outer film, a polyethylene terephthalate film (12 µm) having an aluminum vapor deposited outer surface was dry-laminated to form the laminate film.

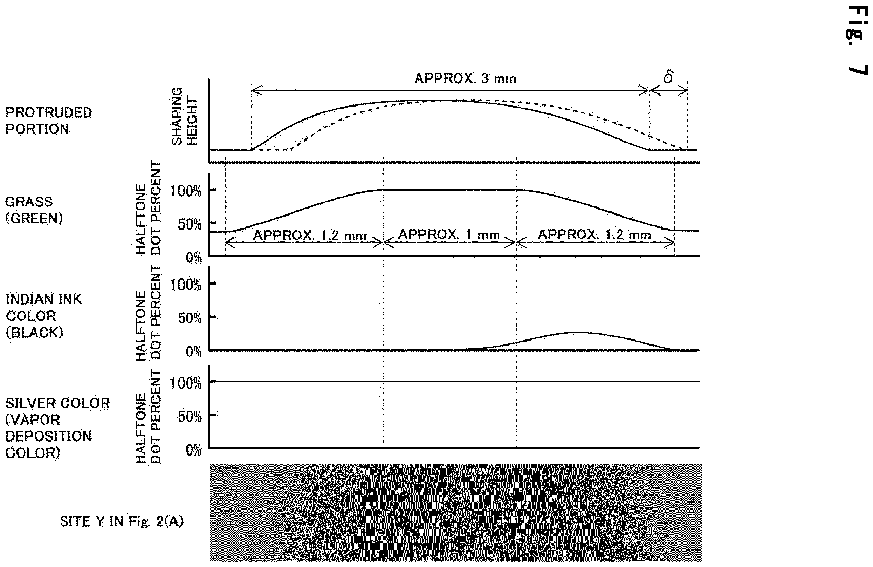

On the outer film of this laminate film, the pattern as shown in Fig. 2 (A) was halftone printed in advance with a clear ink of green (grass). In the halftone printing, as shown in Fig. 7, a gradation of approximately 1.2 mm width was formed to make the dot percent of 40% on the outline to the dot percent of 100% at the center of the printed pattern so that the outline of the printed pattern would be blurred and at the same time, Indian ink printing of dot percent of 0% to 25% and 25% to 0% was provided to emphasize the shade formed on one side (right side) of the protruded portion.

Though the aluminum vapor deposition is not a print, it is indicated as a dot percent of 100% in Fig. 7.

### 2. Formation of protruded portion

The laminate film was heated to 50°C. The upper rotary roll of the pair of rotary rolls was provided with a protruded-portion processing portion in order to compress the laminate film in the thickness direction in a cold process. With the rotary rolls, the protruded portion was formed on the outer film side so that the entire pattern would protrude. In this manner, a protruded portion having a width of 3 mm (cross section at the center of site Y in Fig. 2(A)) and a shaping height of 0.25 mm was formed. At that time, the protruded portion was formed by intentionally misaligning by approximately 1.5 mm from the accurate position with respect to the printed pattern. In Fig. 7, the accurate position of the protruded portion is indicated with a solid line and the misaligned position is indicated with a broken line. A misalignment amount (δ) is indicated schematically to be relatively small with respect to the protruded portion in the drawing.

### 3. Evaluation

The decorative effect of the print of the laminate film and the protruded portion of the printed pattern protruding toward the outer film side, and also recognition of the misalignment of the protruded portion were evaluated visually. As shown in Fig. 2(B), the misalignment is not easily recognizable, which indicates a favorable design.

Furthermore, since a clear ink is used for the printed pattern on the laminate film, the luster of the metal vapor deposition (aluminum vapor deposition) layer of the underlying layer was observed through the clear ink even in the region having a dot percent of 100%, which served to emphasize the shade of the protruded portion synergistically with the blurred printing.

### (Comparative Example 1)

A decorative laminate film was produced in the same manner as Example 1 except that the outline of the printed pattern was not blurred as shown in Fig. 1(A) in printing the pattern on the laminate film. The decorative effect and the recognition of misalignment of the protruded portion were evaluated visually in a manner similar to that of Example 1. As shown in Fig. 1(B), the misalignment was recognizable and the design was inferior to that of Example 1 (Fig. 2).

### (Example 2)

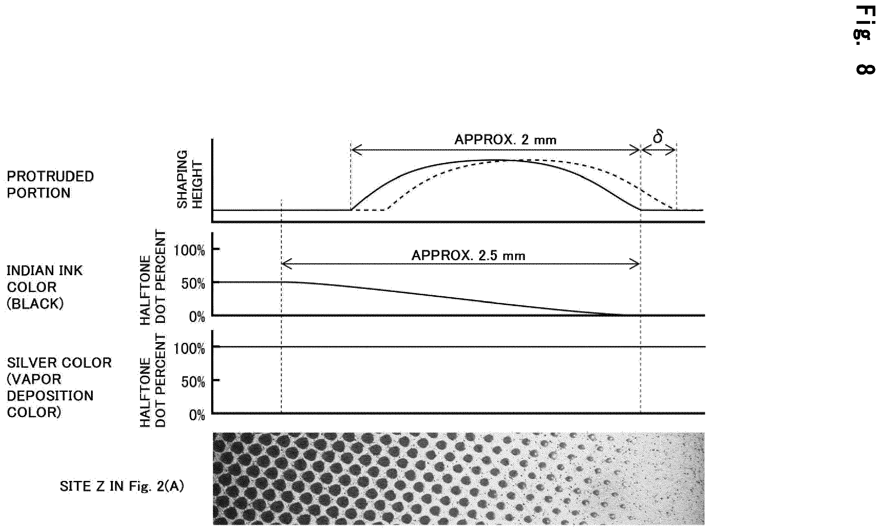

Halftone printing to knock out the character of "white" was provided on the laminate film used in Example 1 as shown in Fig. 3(A), thereby producing a decorative laminate film having a printed pattern. As shown in Fig. 8, the halftone printing was provided so that the background region would have a dot percent of 50%, and the region for forming the knockout printed pattern would have the dot percent of 0%. For this purpose, a gradation was formed to have a width of approximately 2.5 mm to blur the outline of the printed pattern.

Though the aluminum vapor deposition is not a print, it is indicated as a dot percent of 100% in Fig. 8.

Then, the protruded portion having a width of 2 mm (cross section at the center of the site Z in Fig. 3 (A)) and a shaping height of 0.3 mm was formed so that the protruded portion would protrude toward the outer film side along the outline of the character "white" and the contour of the protruded portion would be within the blurred region of the printed pattern.

At that time, the protruded portion was formed to be misaligned intentionally by approximately 1 mm from the accurate position with respect to the printed pattern. In Fig. 8, the accurate position of the protruded portion is indicated with a solid line and the misaligned position is indicated with a broken line. A misalignment amount (δ) is indicated schematically to be relatively small with respect to the protruded portion in the drawing.

### (Evaluation)

Fig. 3(B) shows that the character "white" is provided with a stereoscopic effect by the protruded portion without causing any particular discomfort feeling despite the misalignment of approximately 1 mm between the printed pattern and the protruded portion, and the design is improved.

Although the character "white" is knockout printed, it exhibits silver color derived from the metal vapor deposition (aluminum deposition) layer, providing effects similar to those obtained by the high-brightness printing.

### (Example 3)

A decorative laminate film was produced in the same manner as Example 1 except that a pattern of an abstract shape was halftone printed on the laminate film used in Example 1, as shown in Fig. 4(A). Here, the pattern was simply colored with the clear ink to arrange green leaves together with pink and purple flowers. Here, the dot percent was set to 100% for the central regions of the respective printed patterns of green, pink and purple and the vicinity thereof, and gradation was formed so that the dot percent would be 0% at the end (knockout printing) (Fig. 4(A)).

Next, protruded portions having shapes of flowers and leaves different from the shapes of the printed pattern were formed on the printed pattern similarly to Example 1.

### (Evaluation)

As shown in Fig. 4(B), even in a case where the printed pattern and a protruded portion having a flower pattern do not coincide with each other, a unique design is imparted by the synergic effect of the printed pattern and the protruded portions.

### Industrial Applicability

Since the decorative laminate film of the present invention does not require precise alignment between the printed pattern and the protruded portion, it can be produced at a high speed and can be utilized preferably for a bag-like container like a pouch and a sealing member.

### Explanation of Reference Numerals:

- 10:: laminate film
- 11:: processing roll
- 12:: anvil roll
- 13:: processing portion
- 14:: protruded portion

## Claims

1. A decorative laminate film comprising at least an inner film and an outer film, on which a printed pattern and a protruded portion protruding toward the outer film side are formed, wherein
the protruded portion is positioned on or in the vicinity of the printed pattern, and the printed pattern has a blurred outline.

2. The decorative laminate film according to claim 1, wherein the protruded portion has a contour positioned in the vicinity of the blurred outline of the printed pattern.

3. The decorative laminate film according to claim 1 or 2, wherein the protruded portion is shaped differently from the printed pattern.

4. The decorative laminate film according to any one of claims 1 to 3, wherein the printed pattern has a metallic luster that is derived from any of metal vapor deposition layer, a metal foil or a high-brightness ink printed layer that constitutes the pattern, provided on an inner surface of the outer film.

5. The decorative laminate film according to any one of claims 1 to 4, wherein the blurring is provided by variation in size of dots of halftone print.

6. A method for producing a decorative laminate film, comprising:
forming a printed pattern with a blurred outline on a laminate film comprising at least an inner film and an outer film; and
compress-shaping the laminate film in any of a cold, warm or hot process so as to allow the printed laminate film to protrude toward the outer film side to form a protruded portion at a position of the printed pattern.

7. The method for producing a decorative laminate film according to claim 6, wherein the inner film of the laminate film is formed from polyethylene, the outer film of the laminate film is formed from stretched nylon or stretched polyethylene terephthalate, and any of a metal vapor deposition layer, a metal foil or a high-brightness ink printed layer constituting the pattern is arranged between the inner film and the outer film.
